Europäisches Patentamt

European Patent Office

Office européen des brevets

(19)

(11) **EP 0 848 486 B1**

(12) **EUROPÄISCHE PATENTSCHRIFT**

| | |
|---|---|
| (45) Veröffentlichungstag und Bekanntmachung des Hinweises auf die Patenterteilung: **23.06.2004   Patentblatt 2004/26** | (51) Int Cl.⁷: $H02M\ 7/48$ |

(21) Anmeldenummer: **97120238.7**

(22) Anmeldetag: **19.11.1997**

(54) **Pulsweitenmodulationsverfahren für in Serie geschaltete 2-Punkt-Umrichter**

Pulse width modulation method for series connected two-level inverters

Procédé de modulation par largeur d'impulsion pour onduleurs deux-niveaux connectés en série

(84) Benannte Vertragsstaaten:
**DE FR GB IT**

(30) Priorität: **13.12.1996  DE 19651825**

(43) Veröffentlichungstag der Anmeldung:
**17.06.1998   Patentblatt 1998/25**

(73) Patentinhaber: **DaimlerChrysler AG**
**70567 Stuttgart (DE)**

(72) Erfinder:
• **Steiner, Michael**
**68723 Schwetzingen (DE)**

• **Reinhold, Harry, Dr.**
**69115 Heidelberg (DE)**

(74) Vertreter: **Akers, Noel James**
**Howrey Simon Arnold & White,**
**City Point,**
**One Ropemaker Street**
**London EC2Y 9HS (GB)**

(56) Entgegenhaltungen:
**DE-A- 19 614 627          GB-A- 2 294 821**
**US-A- 3 867 643**

**Beschreibung**

Die Erfindung bezieht sich auf ein Pulsweitenmodulationsverfahren für in Serie geschaltete 2-Punkt-Umrichter gemäss dem Oberbegriff des Patentanspruchs. Die Erfindung kann beispielsweise bei Antriebssystemen für Schienenfahrzeuge verwendet werden.

In der DE 196 14 627 A1 ist ein Antriebssystem für Schienenfahrzeuge vorgeschlagen, bei dem zwischen einem Fahrdraht/Stromabnehmersystem mit nachgeschalteter Haupteingangsdrossel und einem Rad/Schiene-System mehrere 2-Punkt-Umrichter in Serie geschaltet sind. Jeder 2-Punkt-Umrichter ist mit einem Zwischenkreiskondensator beschaltet, der zur Speisung eines Wechselrichters dient.

Die im Fahrdraht auftretenden Stromoberschwingungen sind durch das bei den 2-Punkt-Umrichtern verwendete Pulsweitenmodulationsverfahren und die Haupteingangsdrossel bestimmt. Deshalb kommt dem eingesetzten Pulsweitenmodulationsverfahren eine wesentliche Bedeutung zu.

Aus der Schrift GB 2 294 821 ist ferner ein elektrisches Versorgungssystem mit mehreren in Reihe geschalteten 2-Punkt-Umrichter beschrieben.

Der Erfindung liegt die Aufgabe zugrunde, ein Pulsweitenmodulationsverfahren der eingangs genannten Art anzugeben, das nur geringe Netzrückwirkungen verursacht.

Diese Aufgabe wird in Verbindung mit den Merkmalen des Oberbegriffes erfindungsgemäß durch die im Kennzeichen des Patentanspruchs angegebenen Merkmale gelöst.

Die mit der Erfindung erzielbaren Vorteile bestehen insbesondere darin, daß die Pulsmuster hinsichtlich der Summenspannung aller in Serie geschalteter 2-Punkt-Umrichter und hinsichtlich der einzelnen Teilsummenspannungen optimiert sind, wodurch die auftretenden Oberschwingungen reduziert werden. Durch die Verringerung der erzeugten Oberschwingungen kann die Haupteingangsdrossel verkleinert werden, was Kostenvorteile, Gewichtsersparnisse und Raumersparnisse zur Folge hat. Signalanlagen und Gleisfreimeldeanlagen in direkter Nähe des Fahrdrahtes werden nicht in negativer Weise durch Oberschwingungen beeinflußt.

Die Erfindung wird nachstehend anhand der in der Zeichnung dargestellten Ausführungsbeispiele erläutert. Es zeigen:

Fig. 1     eine Anordnung mit mehreren wechselspannungsseitig in Serie geschalteten 2-Punkt-Umrichtern,

Fig 2     den Winkelversatz der Trägersignale bei sechzehn wechselspannungsseitig in Serie geschalteten 2-Punkt-Umrichtern,

Fig. 3     den Winkelversatz der Trägersignale bei zwölf wechselspannungsseitig in Serie geschalteten 2-Punkt-Umrichtern,

Fig 4     Alternativen beim Winkelversatz der Trägersignale bei zwölf wechselspannungsseitig in Serie geschalteten 2-Punkt-Umrichtern.

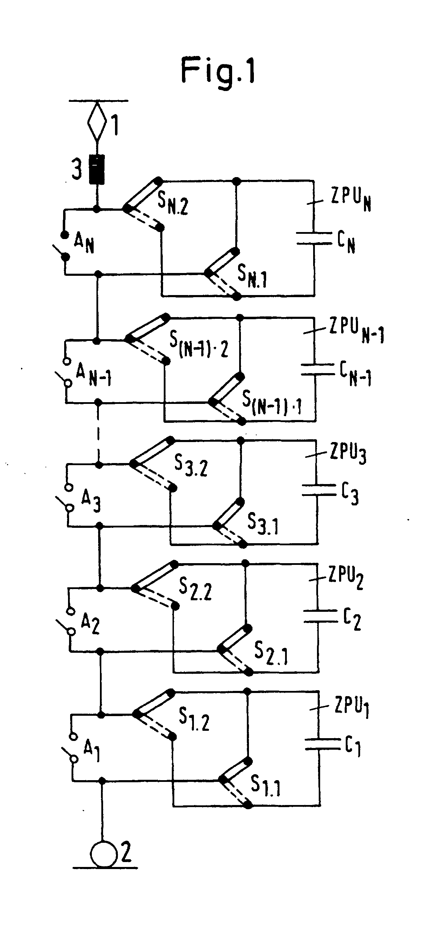

In Fig. 1 ist eine Anordnung mit mehreren wechselspannungsseitig in Serie geschalteten Umrichtern dargestellt. Zwischen einem Fahrdraht/Stromabnehmersystem 1 mit nachgeschalteter Haupteingangsdrossel 3 und einem Rad/Schiene-System 2 sind mehrere 2-Punkt-Umrichter $ZPU_1$, $ZPU_2$, $ZPU_3$,...$ZPU_{N-1}$, $ZPU_N$ in Serie geschaltet. Mit N ist die Anzahl der 2-Punkt-Umrichter bezeichnet. Jeder der 2-Punkt-Umrichter kann mittels eines Schalters $A_1$, $A_2$, $A_3$,..$A_{N-1}$, $A_N$ überbrückt werden.

Am Fahrdraht/Stromabnehmersystem 1 liegt eine Wechselspannung an, während das Rad/Schiene-System 2 auf Erdpotential liegt. Jeder 2-Punkt-Umrichter $ZPU_1$ bzw. $ZPU_2$ bzw. $ZPU_3$,...$ZPU_{N-1}$ bzw $ZPU_N$ weist zwei elektronische Umschalter $S_{1.1}$, $S_{1.2}$ bzw. $S_{2.1}$, $S_{2.2}$ bzw. $S_{3.1}$, $S_{3.2}$,...$S_{(N-1).1}$, $S_{(N-1).2}$ bzw., $S_{N.1}$, $S_{N.2}$ auf, mit deren Hilfe in allgemein bekannter Weise die beiden Anschlüsse der jedem 2-Punkt-Umrichter zugeordneten Zwischenkreiskondensatoren $C_1$ bzw. $C_2$ bzw. $C_3$,... $C_{N-1}$ bzw. $C_N$ mit Spannung beaufschlagt werden können.

Die Pulsmuster der elektronischen Umschalter werden vorzugsweise mittels des Unterschwingungsverfahrens realisiert, wobei versetzte Taktungen der einzelnen 2-Punkt-Umrichter erfolgen, um einen optimalen Betrieb der gesamten Anordnung unter Erzeugung möglichst geringer Oberschwingungen zu erzielen. Der erforderliche Winkelversatz der beispielsweise dreieckförmigen Trägersignale untereinander zur Erzeugung von konstant versetzten Pulsmustern wird nachfolgend näher beschrieben.

Es bestehen die Forderungen, die Pulsmuster sowohl hinsichtlich der netzseitigen Summenspannung aller in Serie geschalteter 2-Punkt-Umrichter als auch hinsichtlich der einzelnen Teilsummenspannungen zu optimieren. Hierbei ist die erste Forderung wichtiger, da sie nicht nur parasitäre Effekte begrenzt, sondern wesentlich die Auslegung der Haupteingangsdrossel 3, einem teuren und schweren Bauelement, bestimmt. Durch Erfüllung der zweiten Forderung werden insbesondere parasitäre Verschiebeströme reduziert bzw. verhindert, welche sich durch parasitäre Kopplung großflächiger Baukomponenten - wie Zwischenkreiskondensatoren - gegenüber dem Erdpotential einstellen.

Aufgrund der harten Kopplung der verschiedenen Zwischenkreise kann vorausgesetzt werden, daß alle Zwischenkreise im wesentlichen dieselbe Zwischenkreisspannung haben und alle 2-Punkt-Umrichter im wesentlichen dieselbe Leistung transportieren müssen.

Die erste Forderung nach optimaler Summenspannung wird erfüllt, indem alle Trägersignale um den Winkel $\alpha = 180°/N$ versetzt werden (konstanter Winkelversatz).

Die zweite Forderung nach Optimierung der einzelnen Teilsummenspannungen wird dadurch erfüllt, indem die Pulsmuster in ihrer räumlichen Anordnung aufeinanderfolgender 2-Punkt-Umrichter möglichst winkelsymmetrisch zueinander versetzt werden.

Aus der zweiten Forderung ergibt sich der folgende Arbeitsablauf: In einem ersten Schritt werden die möglichen Winkelversätze der Trägersignale aus der ersten Forderung bestimmt. In einem zweiten Schritt wird aus den möglichen Winkelversätzen diejenige Reihenfolge bestimmt, die gewährleistet, daß die Pulsmuster aufeinanderfolgender 2-Punkt-Umrichter möglichst gleichmäßig versetzt sind. Dies wird dadurch erreicht, indem der Winkelversatz des Trägersignals eines nachfolgenden 2-Punkt-Umrichters möglichst mittig zwischen zuvor benutzte Winkelversätze zu liegen kommt. Die Reihenfolge der Ansteuerung der einzelnen elektronischen Umschalter der 2-Punkt-Umrichter ist damit optimiert hinsichtlich geringer Potentialsprünge der Zwischenkreise, was vorteilhaft zur Begrenzung der vorstehend bereits erwähnten parasitären Effekte beiträgt.

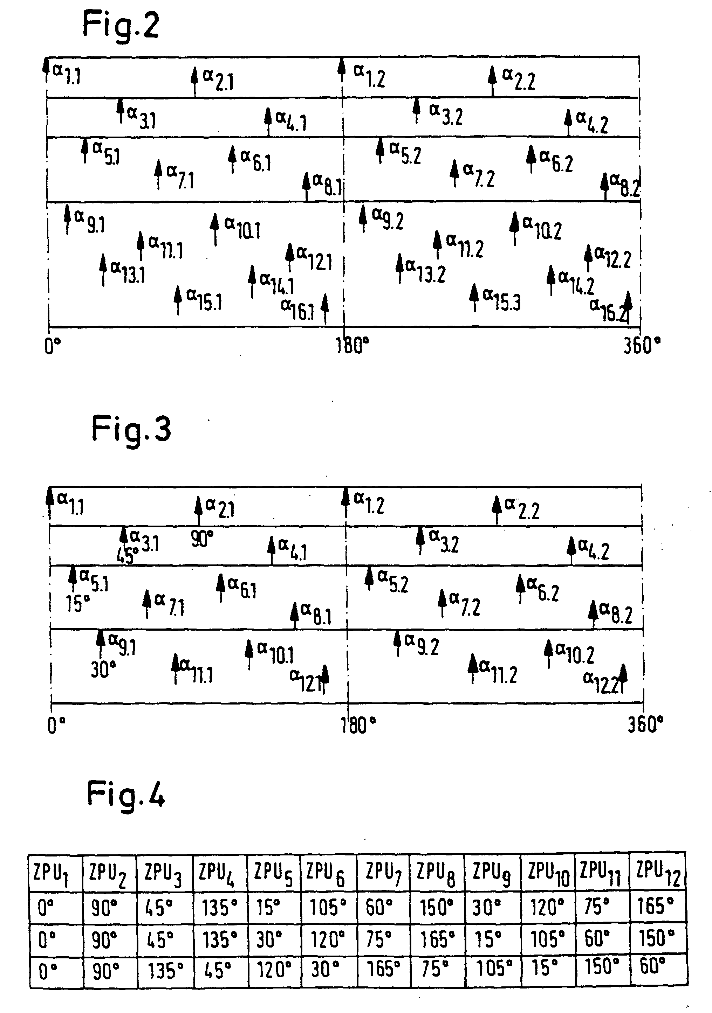

Fig. 2 zeigt den Winkelversatz der Trägersignale bei sechzehn wechselspannungsseitig in Serie geschalteten 2-Punkt-Umrichtern. Der Winkelversatz der Trägersignale der beiden Schalter eines jeden 2-Punkt-Umrichters beträgt dabei in allen Fällen 180°. Aus der ersten Forderung ergibt sich $\alpha = 180°/16 = 11,25°$.

Für den ersten Umrichter gilt beispielsweise, daß der Winkelversatz $\alpha_{1.1}$ für den Schalter $S_{1.1}$ zu $\alpha_{1.1} = 0°$ und folglich der Winkelversatz $\alpha_{1.2}$ für den Schalter $S_{1.2}$ zu $\alpha_{1.2} = 180°$ bestimmt werden. Der Winkelversatz $\alpha_{2.1}$ für den Schalter $S_{2.1}$ des zweiten Umrichters ergibt sich aus der Hälfte zwischen $\alpha_{1.1} = 0°$ und $\alpha_{1.2} = 180°$ zu $\alpha_{2.1} = 90°$, der Winkelversatz $\alpha_{2.2}$ für den Schalter $S_{2.2}$ ist hierzu um 180° verschoben , so daß sich $\alpha_{2.2} = 270°$ ergibt (erster Schritt mit zwei Umnchtern gemäß erster Zeile in Fig. 2).

Der Winkelversatz $\alpha_{3.1}$ für den Schalter $S_{3.1}$ des dritten Umrichters ergibt sich aus der Hälfte zwischen $\alpha_{1.1} = 0°$ und $\alpha_{2.1} = 90°$ zu $\alpha_{3.1} = 45°$, der Winkelversatz $\alpha_{32}$ für den Schalter $S_{3.2}$ ist hierzu um 180° verschoben, so daß sich $\alpha_{3.2} = 225°$ ergibt. Der Winkelversatz $\alpha_{4.1}$ für den Schalter $S_{4.1}$ des vierten Umrichters ergibt sich aus der Hälfte zwischen $\alpha_{2.1} = 90°$ und $\alpha_{1.2} = 180°$ zu $\alpha_{4.1} = 135°$, der Winkelversatz $\alpha_{4.2}$ für den Schalter $S_{4.2}$ ist hierzu um 180° verschoben, so daß sich $\alpha_{4.2} = 315°$ ergibt (zweiter Schritt mit weiteren zwei Umrichtern gemäß zweiter Zeile in Fig. 2).

Der Winkelversatz $\alpha_{5.1}$ für den Schalter $S_{5.1}$ des fünften Umrichters ergibt sich aus der Hälfte zwischen $\alpha_{1.1} = 0°$ und $\alpha_{3.1} = 45°$ zu $\alpha_{5.1} = 22,5°$, der Winkelversatz $\alpha_{5.2}$ für den Schalter $S_{5.2}$ ist hierzu um 180° verschoben , so daß sich $\alpha_{5.2} = 202,5°$ ergibt. Der Winkelversatz $\alpha_{6.1}$ für den Schalter $S_{6.1}$ des sechsten Umrichters ergibt sich aus der Hälfte zwischen $\alpha_{2.1} = 90°$ und $\alpha_{4.1} = 135°$ zu $\alpha_{6.1} = 112,5°$, der Winkelversatz $\alpha_{6.2}$ für den Schalter $S_{6.2}$ ist hierzu um 180° verschoben , so daß sich $\alpha_{6.2} = 292,5°$ ergibt.

Der Winkelversatz $\alpha_{7.1}$ für den Schalter $S_{7.1}$ des siebten Umrichters ergibt sich aus der Hälfte zwischen $\alpha_{3.1} = 45°$ und $\alpha_{2.1} = 90°$ zu $\alpha_{7.1} = 67,5°$, der Winkelversatz $\alpha_{7.2}$ für den Schalter $S_{572}$ ist hierzu um 180° verschoben, so daß sich $\alpha_{7.2} = 247,5°$ ergibt. Der Winkelversatz $\alpha_{8.1}$ für den Schalter $S_{8.1}$ des achten Umrichters ergibt sich aus der Hälfte zwischen $\alpha_{4.1} = 135°$ und $\alpha_{1.2} = 180°$ zu $\alpha_{8.1} = 157,5°$, der Winkelversatz $\alpha_{8.2}$ für den Schalter $S_{8.2}$ ist hierzu um 180° verschoben , so daß sich $\alpha_{8.2} = 337,5°$ ergibt (dritter Schritt mit weiteren vier Umrichtern gemäß dritter Zeile in Fig. 2).

Der Winkelversatz $\alpha_{9.1}$ für den Schalter $S_{9.1}$ des neunten Umrichters ergibt sich aus der Hälfte zwischen $\alpha_{1.1} = 0°$ und $\alpha_{5.1} = 22,5°$ zu $\alpha_{9.1} = 11,25°$, der Winkelversatz $\alpha_{9.2}$ für den Schalter $S_{9.2}$ ist hierzu um 180° verschoben, so daß sich $\alpha_{9.2} = 191,25°$ ergibt. Der Winkelversatz $\alpha_{10.1}$ für den Schalter $S_{10.1}$ des zehnten Umrichters ergibt sich aus der Hälfte zwischen $\alpha_{2.1} = 90°$ und $\alpha_{6.1} = 112,5°$ zu $\alpha_{10.1} = 101,25°$, der Winkelversatz $\alpha_{10.2}$ für den Schalter $S_{10.2}$ ist hierzu um 180° verschoben , so daß sich $\alpha_{10.2} = 281,25°$ ergibt.

Der Winkelversatz $\alpha_{11.1}$ für den Schalter $S_{11.1}$ des elften Umrichters ergibt sich aus der Hälfte zwischen $\alpha_{3.1} = 45°$ und $\alpha_{7.1} = 67,5°$ zu $\alpha_{11.1} = 56,25°$, der Winkelversatz $\alpha_{11.2}$ für den Schalter $S_{11.2}$ ist hierzu um 180° verschoben , so daß sich $\alpha_{11.2} = 236,25°$ ergibt. Der Winkelversatz $\alpha_{12.1}$ für den Schalter $S_{12.1}$ des zwölften Umnchters ergibt sich aus der Hälfte zwischen $\alpha_{4.1} = 135°$ und $\alpha_{8.1} = 157,5°$ zu $\alpha_{12.1} = 146,25°$, der Winkelversatz $\alpha_{12.2}$ für den Schalter $S_{12.2}$ ist hierzu um 180° verschoben , so daß stich $\alpha_{12.2} = 326,25°$ ergibt.

Der Winkelversatz $\alpha_{13.1}$ fur den Schalter $S_{13.1}$ des dreizehnten Umrichters ergibt sich aus der Hälfte zwischen $\alpha_{5.1} = 22,5°$ und $\alpha_{3.1} = 45°$ zu $\alpha_{13.1} = 33,75°$, der Winkelversatz $\alpha_{13.2}$ für den Schalter $S_{13.2}$ ist hierzu um 180° verschoben , so daß sich $\alpha_{13.2} = 213,75°$ ergibt. Der Winkelversatz $\alpha_{14.1}$ für den Schalter $S_{14.1}$ des vierzehnten Umrichters ergibt sich aus der Hälfte zwischen $\alpha_{9.1} = 112,5°$ und $\alpha_{4.1} = 135°$ zu $\alpha_{14.1} = 123,75°$, der Winkelversatz $\alpha_{14.2}$ für den Schalter $S_{14.2}$ ist hierzu um 180° verschoben, so daß sich $\alpha_{14.2} = 303,75°$ ergibt.

Der Winkelversatz $\alpha_{15.1}$ für den Schalter $S_{15.1}$ des fünfzehnten Umrichters ergibt sich aus der Hälfte zwischen $\alpha_{7.1} = 67,5°$ und $\alpha_{2.1} = 90°$ zu $\alpha_{15.1} = 78,75°$, der Winkelversatz $\alpha_{15.2}$ für den Schalter $S_{15.2}$ ist hierzu um 180° verschoben , so daß sich $\alpha_{15.2} = 258,75°$ ergibt. Der Winkelversatz $\alpha_{16.1}$ für den Schalter $S_{15.1}$ des sechzehnten Umrichters ergibt sich aus der Hälfte zwischen $\alpha_{8.1} = 157,5°$ und $\alpha_{1.2} = 180°$ zu $\alpha_{16.1} = 168,75°$, der Winkelversatz $\alpha_{16.2}$ für den Schalter $S_{16.2}$ ist hierzu um 180° verschoben, so daß sich $\alpha_{16.2} = 348,75°$ ergibt (vierter Schritt mit weiteren acht Umrichtern gemäß vierter Zeile in Fig. 2)..

Wie aus der Fig. 2 im Zusammenhang mit der vorstehenden Beschreibung ersichtlich ist, erhält allgemein der zweite Umrichter seine Trägersignale in der Mitte zwischen den Trägersignalen des ersten Umrichters, so daß für die beiden ersten Umrichter Winkelversätze 0°, 90°, 180°, 270° einzustellen sind, wenn beispielhaft von $\alpha_{1.1} = 0°$ ausgegangen wird. Danach werden zwischen die so versetzten Trägersignale der beiden ersten Umrichter die Trägersignale für zwei weitere Umrichter unter Einhaltung der Symmetriebedingungen vorgegeben, so daß die zusätzlichen Winkelversätze 45°, 135°, 225°, 315° einzustellen sind. Anschließend werden die Trägersignale für weitere vier Umrichter zwischen die Trägersignale der ersten vier Umrichter gelegt, so daß die zusätzlichen Winkelversätze 22,5°, 67,5°, 112,5°, 157,5°, 202,5°, 247,5°, 292,5°, 337,5° einzustellen sind. Danach werden die Trägersignale für weitere acht Umrichter optimal zwischen die Trägersignale der ersten acht Umrichter versetzt usw.

Eine optimale Versetzung der Trägersignale ist nur bei einer bestimmten Anzahl N möglich, wobei N = $2^k$, mit k = ganzzahlig. Hieraus folgt, daß eine optimale Versetzung nur für N = 2, 4, 8, 16, 32 usw. möglich ist. Falls eine Anordnung mit einer Anzahl N Umrichtern vorliegt, bei der N ungleich 2, 4, 8, 16, 32 usw. ist, muß hinsichtlich des Winkelversätze ein Kompromiß bezüglich der beiden vorstehend erwähnten Forderungen gefunden werden. Die erste Forderung nach optimaler Summenspannung ist wichtiger als die zweite Forderung nach optimalen Teilsummenspannungen, deshalb muß der Kompromiß in den Teilsummenspannungen gesucht werden. Das Optimierungsprinzip, die Trägersignale möglichst winkelsymmetrisch zu versetzen, bleibt dabei jedoch unverändert und wird nachfolgend am Beispiel einer Anordnung mit N = 12 Umrichtern an Hand von Fig. 3 näher erläutert.

Die erste Forderung nach optimaler Summenspannung wird erfüllt, indem alle Trägersignale um den Winkel $\alpha = 180°/N = 180°/12 = 15°$ versetzt werden.

Die zweite Forderung nach Optimierung der einzelnen Teilsummenspannungen wird dadurch erfüllt, indem die Pulsmuster aufeinanderfolgender 2-Punkt-Umrichter unter Beachtung der Vorgabe $\alpha = 15°$ möglichst winkelsymmetrisch zueinander versetzt werden, wobei es jedoch nicht wie beim vorstehenden Beispiel mit N = 16 in jedem Fall möglich ist, daß der Winkelversatz des Trägersignals eines nachfolgenden Umrichters genau mittig zwischen zuvor benutzte Winkelversätze zu liegen kommt.

Wie aus Fig. 3 hervorgeht, ergeben sich im einzelnen die folgenden Winkelversätze: $\alpha_{1.1} = 0°$, $\alpha_{1.2} = 180°$, $\alpha_{2.1} = 90°$, $\alpha_{2.2} = 270°$ für die beiden ersten Umrichter (erster Schritt gemäß erster Zeile in Fig. 3), $\alpha_{3.1} = 45°$, $\alpha_{3.2} = 225°$, $\alpha_{4.1} = 135°$, $\alpha_{4.2} = 315°$ für die nächsten beiden Umrichter (zweiter Schritt gemäß zweiter Zeile in Fig. 3), $\alpha_{5.1} = 15°$, $\alpha_{5.2} = 195°$, $\alpha_{6.1} = 105°$, $\alpha_{6.2} = 285°$, $\alpha_{7.1} = 60°$, $\alpha_{7.2} = 240°$, $\alpha_{8.1} = 150°$, $\alpha_{8.2} = 330°$

für die nächsten vier Umrichter (dritter Schritt gemäß dritter Zeile in Fig. 3), und $\alpha_{9.1} = 30°$, $\alpha_{9.2} = 210°$, $\alpha_{10.1} = 120°$, $\alpha_{10.2} = 300°$, $\alpha_{11.1} = 75°$, $\alpha_{11.2} = 255°$, $\alpha_{12.1} = 165°$, $\alpha_{12.2} = 345°$ für die restlichen vier Umrichter (vierter Schritt gemäß vierter Zeile in Fig. 3).

In der zweiten Zeile der Fig. 4 ist dieses Ergebnis nochmals festgehalten und kann mit den weiteren Varianten gemäß der dritten und vierten Zeile verglichen werden. Dabei ist bei der tabellarischen Darstellungsweise gemäß Fig. 4 lediglich der Winkelversatz eines der beiden Trägersignale für einen Umrichter angegeben, der Winkelversatz des jeweils weiteren Trägersignals des gleichen Umrichters ergibt sich in einfacher Weise durch die Addition der angegebenen Winkelversätze mit 180°. Die in Fig. 4 angegebenen Alternativen sind bezüglich der Reduzierung von Oberschwingungen gleichwertig. Darüber hinaus bestehen noch weitere Möglichkeiten des Winkelversatzes.

Unter idealen Voraussetzungen, daß alle Zwischenkreise dieselbe Spannung haben und mit demselben Modulationsgrad betrieben werden, löschen sich alle Spannungsoberschwingungen der Summenspannung bis zur 2N-fachen Schaltfrequenz aus

**Patentansprüche**

1. Pulsweitenmodulationsverfahren für N wechselspannungsseitig in Serie geschaltete, nach ihrem Platz in der Serienschaltung aufeinanderfolgend von 1 bis N nummerierte 2-Punkt-Umrichter, **dadurch gekennzeichnet, dass** alle Trägersignale um den festen Winkelversatz

$$\alpha = 180°/N$$

gegeneinander versetzt werden und dass die Versetzung den folgenden iterativen Regeln folgt:

- Der Winkelversatz des Trägersignals des ersten der beiden elektronischen Schalter des 2-Punkt-Umrichters Nummer 1 wird frei gewählt;

- Der Winkelversatz des Trägersignals des zweiten der beiden elektronischen Schalter des 2-Punkt-Umrichters Nummer 1 wird so gewählt, dass der Winkelversatz zwischen den beiden elektronischen Umschaltern des 2-Punkt-Umrichters Nummer 1 180° beträgt;

- Es werden aufeinanderfolgend J Iterationen durchgeführt, wobei $2^{(J-1)} < N \leq 2^J$ ist und für jede Iteration j aufeinanderfolgend alle Versetzungen der 2-Punkt-Umrichter bestimmt werden, die in der Reihenschaltung einen Platz k haben, wobei j von 1 bis J läuft, k von $2^{(j-1)} + 1$

bis *Min*[*N*, $2^j$] läuft und *Min*[*N*, $2^j$] die numerisch kleinere Zahl aus *N* und $2^j$ darstellt, mit folgenden Schritten:

- Der Winkelversatz des Trägersignals des ersten der beiden elektronischen Schalter des 2-Punkt-Umrichters Nummer *k* wird so gewählt, dass er möglichst mittig zwischen zwei aufeinanderfolgenden der zuvor in einer der Iterationen *1* bis (*j*-1) gewählten und nicht bereits zur Wahl eines Winkelversatzes der Iteration Nummer *j* benutzten Winkelversätzen zu liegen kommt,

- der Winkelversatz des Trägersignals des zweiten der beiden elektronischen Schalter des 2-Punkt-Umrichters *k* wird so gewählt, dass der Winkelversatz zwischen den beiden elektronischen Umschaltern des 2-Punkt-Umrichters *k* 180° beträgt,

so dass die Pulsmuster aufeinanderfolgender 2-Punkt-Umrichter möglichst winkelsymmetrisch zueinander versetzt sind.

## Claims

1. Pulse width modulation method for *N* 2-point converters which are connected in series on the AC voltage side and are numbered successively from 1 to *N* on the basis of their location in the series circuit, **characterized in that** all other carrier signals are offset with respect to one another through the fixed angle offset

$$\alpha = 180°/N$$

and **in that** the offset follows the following iterative rules:

- the angle offset of the carrier signal of the first of the two electronic switches of the 2-point converter number 1 is chosen freely;

- the angle offset of the carrier signal of the second of the two electronic switches of the 2-point converter number 1 is chosen such that the angle offset between the two electronic switches of the 2-point converter number 1 is 180°;

- J iterations are carried out successively, where $2^{(J-1)} < N \leq 2^J$ and all the offsets of the 2-point converters which are at a location *k* in the series circuit are determined successively for each iteration *j*, in which *j* runs from 1 to *J*, *k* runs from $2^{(j-1)} + 1$ to *Min* [N,$2^j$] and *Min* [N,$2^j$] represents the numerically smaller number from *N* and $2^j$, having the following steps:

- the angle offset of the carrier signal of the first of the two electronic switches of the 2-point converter number *k* is chosen such that it is located as centrally as possible between two successive angle offsets of the angle offsets which were previously chosen in one of the iterations 1 to (*j*-1) and have not already been used for choosing an angle offset for the iteration number *j*,

- the angle offset of the carrier signal of the second of the two electronic switches of the 2-point converter *k* is chosen such that the angle offset between the two electronic changeover switches in the 2-point converter *k* is 180°,

so that the pulse patterns of successive 2-point converters are offset at angles that are as symmetrical as possible with respect to one another.

## Revendications

1. Procédé de modulation par largeur d'impulsion pour N onduleurs 2 niveaux montés en série du côté de la tension alternative, numérotés de 1 à N successivement en fonction de leur position dans le montage en série, **caractérisé en ce que** tous les signaux porteurs sont décalés les uns des autres du décalage angulaire fixe

$$\alpha = 180°/N$$

et **en ce que** le décalage suit les règles itératives suivantes :

- le décalage angulaire du signal porteur du premier des deux commutateurs électroniques de l'onduleur 2 niveaux numéro 1 est choisi librement ;

- le décalage angulaire du signal porteur du deuxième des deux commutateurs électroniques de l'onduleur 2 niveaux numéro 1 est choisi de telle sorte que le décalage angulaire entre les deux commutateurs électroniques de l'onduleur 2 niveaux numéro 1 valle 180° ;

- On effectue J itérations successives, où $2^{(J-1)} < N \leq 2^J$ et pour chaque itération j, on détermine successivement tous les décalages des onduleurs 2 niveaux, qui ont une position k dans le montage en série, j allant de 1 à J, k allant de

$2^{(j-1)} + 1$ à Min[N, $2^j$] et Min[N, $2^j$] représentant le nombre le plus petit numériquement de N et $2^j$, avec les étapes suivantes :

- le décalage angulaire du signal porteur du premier des deux commutateurs électroniques de l'onduleur 2 niveaux de numéro k est choisi de telle sorte qu'il se situe autant que possible au milieu entre deux décalages angulaires successifs des décalages angulaires sélectionnés préalablement dans l'une des itérations 1 à (j-1) et non déjà utilisés pour la sélection d'un décalage angulaire de l'itération de numéro j,

- le décalage angulaire du signal porteur du deuxième des deux commutateurs électroniques de l'onduleur 2 niveaux de numéro k est choisi de telle sorte que le décalage angulaire entre les deux commutateurs électroniques de l'onduleur 2 niveaux dé numéro k valle 180°,

de sorte que les modèles d'impulsions d'onduleurs 2 niveaux successifs soient décalés les uns par rapport aux autres autant que possible avec une symétrie angulaire.

# Fig.1

## Fig.2

$\alpha_{1.1}$ $\alpha_{2.1}$ $\alpha_{1.2}$ $\alpha_{2.2}$ $\alpha_{3.1}$ $\alpha_{4.1}$ $\alpha_{3.2}$ $\alpha_{4.2}$ $\alpha_{5.1}$ $\alpha_{6.1}$ $\alpha_{5.2}$ $\alpha_{6.2}$ $\alpha_{7.1}$ $\alpha_{8.1}$ $\alpha_{7.2}$ $\alpha_{8.2}$ $\alpha_{9.1}$ $\alpha_{10.1}$ $\alpha_{9.2}$ $\alpha_{10.2}$ $\alpha_{11.1}$ $\alpha_{12.1}$ $\alpha_{11.2}$ $\alpha_{12.2}$ $\alpha_{13.1}$ $\alpha_{14.1}$ $\alpha_{13.2}$ $\alpha_{14.2}$ $\alpha_{15.1}$ $\alpha_{16.1}$ $\alpha_{15.3}$ $\alpha_{16.2}$

0°  180°  360°

## Fig.3

$\alpha_{1.1}$ $\alpha_{2.1}$ $\alpha_{1.2}$ $\alpha_{2.2}$ $\alpha_{3.1}$ 90° $\alpha_{4.1}$ $\alpha_{3.2}$ $\alpha_{4.2}$ 45° $\alpha_{5.1}$ $\alpha_{6.1}$ $\alpha_{5.2}$ $\alpha_{6.2}$ 15° $\alpha_{7.1}$ $\alpha_{8.1}$ $\alpha_{7.2}$ $\alpha_{8.2}$ $\alpha_{9.1}$ $\alpha_{10.1}$ $\alpha_{9.2}$ $\alpha_{10.2}$ 30° $\alpha_{11.1}$ $\alpha_{12.1}$ $\alpha_{11.2}$ $\alpha_{12.2}$

0°  180°  360°

## Fig.4

| ZPU$_1$ | ZPU$_2$ | ZPU$_3$ | ZPU$_4$ | ZPU$_5$ | ZPU$_6$ | ZPU$_7$ | ZPU$_8$ | ZPU$_9$ | ZPU$_{10}$ | ZPU$_{11}$ | ZPU$_{12}$ |
|---|---|---|---|---|---|---|---|---|---|---|---|
| 0° | 90° | 45° | 135° | 15° | 105° | 60° | 150° | 30° | 120° | 75° | 165° |
| 0° | 90° | 45° | 135° | 30° | 120° | 75° | 165° | 15° | 105° | 60° | 150° |
| 0° | 90° | 135° | 45° | 120° | 30° | 165° | 75° | 105° | 15° | 150° | 60° |